# EUROPÄISCHE PATENTANMELDUNG

(11) **EP 3 136 494 A1**
(43) Veröffentlichungstag der Anmeldung: **01.03.2017**
(21) Anmeldenummer: 15182511.4
(22) Anmeldetag: 26.08.2015
(51) Int. Cl.: H01M 10/04, H01M 10/0587, H01M 10/0525

(54) **VERFAHREN ZUR HERSTELLUNG EINES ELEKTRODENWICKELS, ELEKTRODENWICKEL UND BATTERIEZELLE**

(71) Anmelder: Lithium Energy and Power GmbH & Co. KG, 70469 Stuttgart (DE)
(72) Erfinder: Hara, Hideyuki, Otsu-shi, Shiga-ken, Shiga 520-0854 (JP); Hebach, Andreas, 71638 Ludwigsburg (DE); Schmid, Steffen, Kamigyo-ku, Kyoto-shi, Kyoto 602-8014 (JP)
(74) Vertreter: Bee, Joachim

(57) **Zusammenfassung**

Die Erfindung betrifft ein Verfahren zur Herstellung eines Elektrodenwickels (10) für eine Batteriezelle, wobei eine folienartig ausgebildete Kathode (22) und eine folienartig ausgebildete Anode (21) an einen Wickelkern (65) angelegt werden, und die Kathode (22) und die Anode (21) durch Drehung des Wickelkerns (65) um eine Wickelachse (A) auf den Wickelkern (65) aufgewickelt werden, wobei die Kathode (22) sich parallel zu der Wickelachse (A) erstreckende Kathodenkontaktfahnen (26) aufweist und/oder die Anode (21) sich parallel zu der Wickelachse (A) erstreckende Anodenkontaktfahnen (25) aufweist. Die Kathodenkontaktfahnen (26) und/oder die Anodenkontaktfahnen (25) werden derart relativ zu dem Wickelkern (65) ausgerichtet, dass die Kathodenkontaktfahnen (26) und/oder die Anodenkontaktfahnen (25) durch während der Drehung wirkende Trägheitskräfte (F) in Richtung auf eine die Wickelachse (A) rechtwinklig schneidende Längsachse (X) des Wickelkerns (65) gebogen werden. Die Erfindung betrifft auch einen durch das erfindungsgemäße Verfahren hergestellten Elektrodenwickel (10) sowie eine Batteriezelle, die mindestens einen erfindungsgemäßen Elektrodenwickel (10) umfasst.

## Beschreibung

Die Erfindung betrifft ein Verfahren zur Herstellung eines Elektrodenwickels für eine Batteriezelle, wobei eine folienartig ausgebildete Kathode und eine folienartig ausgebildete Anode an einen Wickelkern angelegt werden, und die Kathode und die Anode durch Drehung des Wickelkerns um eine Wickelachse auf den Wickelkern aufgewickelt werden. Die Erfindung betrifft auch einen durch das erfindungsgemäße Verfahren hergestellten Elektrodenwickel sowie eine Batteriezelle.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Bei dem Aktivmaterial für die Kathode handelt es sich beispielsweise um ein Metalloxid. Bei dem Aktivmaterial für die Anode handelt es sich beispielsweise um Silizium. Aber auch Graphit ist als Aktivmaterial für Anoden verbreitet.

Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die beiden Elektroden des Elektrodenwickels werden mittels Kollektoren elektrisch mit Polen der Batteriezelle, welche auch als Terminals bezeichnet werden, verbunden. Die Elektroden und der Separator sind von einem in der Regel flüssigen Elektrolyt umgeben.

Eine gattungsgemäße Batteriezelle, die eine Anode und eine Kathode umfasst, ist beispielsweise aus der DE 10 2012 223 796 A1 bekannt.

Ein Verfahren zur Herstellung eines Elektrodenwickels für eine Batteriezelle geht aus der KR20120019217 A hervor. Dabei werden eine Anode und eine Kathode unter Zwischenlage eines Separators zu einem Elektrodenwickel gewunden, wobei Anodenkontaktfahnen und Kathodenkontaktfahnen in die gleiche Richtung von der Anode und der Kathode weg ragen.

Auch aus der US 2014/0186671 A1 ist ein Verfahren zur Herstellung eines Elektrodenwickels für eine Batteriezelle bekannt. Dabei werden eine Anode und eine Kathode unter Zwischenlage eines Separators auf einen Wickelkern aufgewickelt.

### Offenbarung der Erfindung

Es wird ein Verfahren zur Herstellung eines Elektrodenwickels für eine Batteriezelle vorgeschlagen, wobei eine folienartig ausgebildete Kathode und eine folienartig ausgebildete Anode an einen Wickelkern angelegt werden, und die Kathode und die Anode durch Drehung des Wickelkerns um eine Wickelachse auf den Wickelkern aufgewickelt werden, wobei die Kathode sich parallel zu der Wickelachse erstreckende Kathodenkontaktfahnen aufweist und/oder wobei die Anode sich parallel zu der Wickelachse erstreckende Anodenkontaktfahnen aufweist.

Erfindungsgemäß werden die Kathodenkontaktfahnen sowie die Anodenkontaktfahnen derart relativ zu dem Wickelkern ausgerichtet, dass die Kathodenkontaktfahnen sowie die Anodenkontaktfahnen durch Trägheitskräfte, die während der Drehung auf die Kathodenkontaktfahnen sowie auf die Anodenkontaktfahnen wirken, in Richtung auf eine Längsachse des Wickelkerns gebogen werden, wobei die Längsachse die Wickelachse rechtwinklig schneidet.

Der Wickelkern weist dabei, bezüglich der Wickelachse, einen von einer rotationssymmetrischen Form abweichenden Querschnitt auf. Insbesondere weist der Wickelkern keinen kreisrunden Querschnitt auf. Der Wickelkern ist also nicht kreiszylindrisch ausgestaltet.

Vorzugsweise weist der Wickelkern einen zumindest annähernd rechteckförmigen Querschnitt auf. Insbesondere weist der Wickelkern dabei keinen quadratischen Querschnitt auf. Die Längsachse erstreckt sich dabei parallel zu den langen Seiten des annähernd rechteckförmigen Querschnitts, also rechtwinklig zu den kurzen Seiten des annähernd rechteckförmigen Querschnitts.

Vorteilhaft ist der Wickelkern ebenensymmetrisch zu einer durch die Wickelachse und die Längsachse aufgespannten Ebene ausgebildet. Insbesondere kann der Wickelkern prismatisch oder quaderförmig ausgestaltet sein.

Die Kathodenkontaktfahnen sowie die Anodenkontaktfahnen werden dabei derart relativ zu dem Wickelkern ausgerichtet, dass während der Drehung der Wickelkern in Richtung auf die Kathodenkontaktfahnen sowie auf die Anodenkontaktfahnen bewegt wird. Die Kathodenkontaktfahnen sowie die Anodenkontaktfahnen eilen bei der Drehung um die Wickelachse somit dem Wickelkern vor.

Vorzugsweise werden die Kathodenkontaktfahnen in einer Kathodenlinie fluchtend angeordnet, welche die Längsachse schneidet. Ebenso werden die Anodenkontaktfahnen vorzugsweise fluchtend in einer Anodenlinie angeordnet, welche die Längsachse schneidet.

Dabei schneiden die Kathodenlinie sowie die Anodenlinie die Längsachse vorzugsweise rechtwinklig.

Die Kathodenlinie, in der die Kathodenkontaktfahnen fluchtend angeordnet werden, verläuft vorzugsweise beabstandet zu der Wickelachse. Auch die Anodenlinie, in der die Anodenkontaktfahnen fluchtend angeordnet werden, verläuft vorzugsweise beabstandet zu der Wickelachse.

Es wird auch ein Elektrodenwickel vorgeschlagen, der durch das erfindungsgemäße Verfahren hergestellt wird.

Ebenso wird eine Batteriezelle vorgeschlagen, die mindestens einen erfindungsgemäßen Elektrodenwickel umfasst.

Eine erfindungsgemäße Batteriezelle findet vorteilhaft Verwendung in einem Elektrofahrzeug (EV), in einem Hybridfahrzeug (HEV), in einem Plug-In-Hybridfahrzeug (PHEV), in einer stationären Batterie, insbesondere zur Netzstabilisierung in Haushalten, in einer Batterie in einer marinen Anwendung, beispielsweise beim Schiffsbau oder in Jet-Skis, oder in einer Batterie in einer aeronautischen Anwendung, insbesondere beim Flugzeugbau.

### Vorteile der Erfindung

Durch die Drehung des Wickelkerns in eine Drehrichtung erfahren die Kathodenkontaktfahnen sowie die Anodenkontaktfahnen aufgrund ihrer Massenträgheit eine Biegung. Bei einer ungünstigen Ausrichtung der Kathodenkontaktfahnen sowie der Anodenkontaktfahnen erfolgt besagte Biegung in Radialrichtung nach außen, also von der Wickelachse weg. Dabei kann eine Kathodenkontaktfahne oder eine Anodenkontaktfahne um 180° umgebogen werden und wird dann bei der nächsten Umdrehung des Wickelkerns von der folgenden Lage der Anode oder der Kathode überdeckt und so in den Elektrodenwickel eingewickelt.

Beim dem erfindungsgemäßen Verfahren zur Herstellung eines Elektrodenwickels ist eine Biegung der Kathodenkontaktfahnen sowie der Anodenkontaktfahnen in Radialrichtung nach außen, also von der Wickelachse weg, ausgeschlossen. Ein Einwickeln von Kathodenkontaktfahnen sowie von Anodenkontaktfahnen in den Elektrodenwickel ist somit verhindert. Dadurch sinkt die Ausschussrate, und die Effektivität bei der Herstellung von Elektrodenwickeln ist erhöht.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Batteriezelle,
- Figur 2: eine schematische, perspektivische Darstellung eines Wickelkerns mit einer aufzuwickelnden Anode,
- Figur 3: eine schematische Draufsicht auf einen Elektrodenwickel während des Aufwickelns einer Anode und einer Kathode auf einen Wickelkern und
- Figur 4: eine schematische Seitenansicht eines fertig gestellten Elektrodenwickels.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

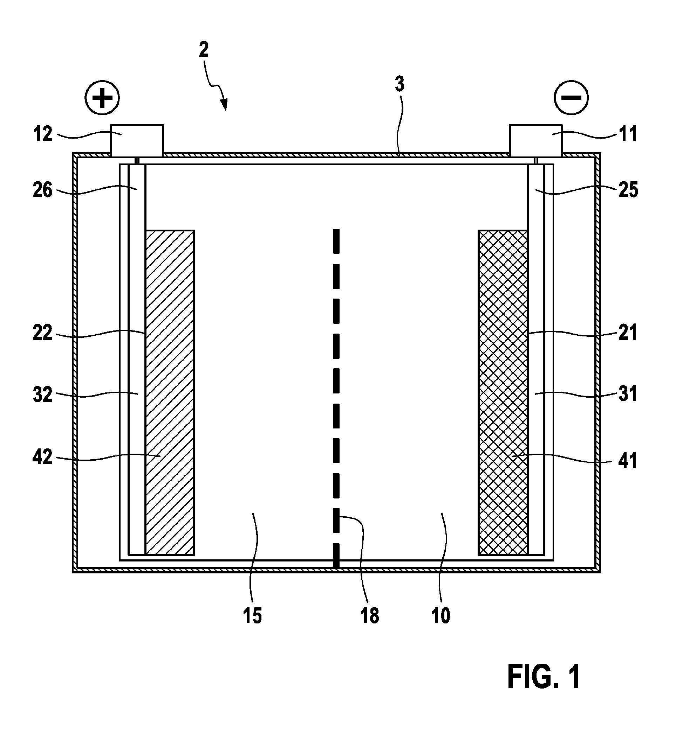

In Figur 1 ist eine Batteriezelle 2 schematisch dargestellt. Die Batteriezelle 2 umfasst ein Zellengehäuse 3, welches prismatisch, vorliegend quaderförmig, ausgebildet ist. Das Zellengehäuse 3 ist vorliegend elektrisch leitend ausgeführt und beispielsweise aus Aluminium gefertigt. Das Zellengehäuse 3 kann aber auch aus einem elektrisch isolierenden Material, beispielsweise Kunststoff, gefertigt sein.

Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden. Die Terminals 11, 12 sind beabstandet voneinander an einer Deckfläche des prismatischen Zellengehäuses 3 angeordnet.

Innerhalb des Zellengehäuses 3 der Batteriezelle 2 ist ein Elektrodenwickel 10 angeordnet, welcher zwei Elektroden, nämlich eine Anode 21 und eine Kathode 22, aufweist. Die Anode 21 und die Kathode 22 sind jeweils folienartig ausgeführt und unter Zwischenlage eines Separators 18 zu dem Elektrodenwickel 10 gewickelt. Es ist auch denkbar, dass mehrere Elektrodenwickel 10 in dem Zellengehäuse 3 vorgesehen sind.

Die Anode 21 umfasst ein anodisches Aktivmaterial 41, welches folienartig ausgeführt ist. Das anodische Aktivmaterial 41 weist als Grundstoff vorliegend Silizium oder eine Silizium enthaltende Legierung auf. Die Anode 21 umfasst ferner einen Stromableiter 31, welcher ebenfalls folienartig ausgebildet ist. Das anodische Aktivmaterial 41 und der Stromableiter 31 der Anode 21 sind flächig aneinander gelegt und miteinander verbunden. Somit ist auch die Anode 21 folienartig ausgebildet.

Der Stromableiter 31 der Anode 21 ist elektrisch leitfähig ausgeführt und aus einem Metall gefertigt, beispielsweise aus Kupfer. Von dem Stromableiter 31 der Anode 21 ragen Anodenkontaktfahnen 25 weg. Die Anodenkontaktfahnen 25 des Stromableiters 31 der Anode 21 sind elektrisch mit dem negativen Terminal 11 der Batteriezelle 2 verbunden.

Die Kathode 22 umfasst ein kathodisches Aktivmaterial 42, welches folienartig ausgeführt ist. Das kathodische Aktivmaterial 42 weist als Grundstoff ein Metalloxid auf, beispielsweise Lithium-Kobalt-Oxid (LiCoO₂). Die Kathode 22 umfasst ferner einen Stromableiter 32, welcher ebenfalls folienartig ausgebildet ist. Das kathodische Aktivmaterial 42 und der Stromableiter 32 der Kathode 22 sind flächig aneinander gelegt und miteinander verbunden. Somit ist auch die Kathode 22 folienartig ausgebildet.

Der Stromableiter 32 der Kathode 22 ist elektrisch leitfähig ausgeführt und aus einem Metall gefertigt, beispielsweise aus Aluminium. Von dem Stromableiter 32 der Kathode 22 ragen Kathodenkontaktfahnen 26 weg. Die Kathodenkontaktfahnen 26 des Stromableiters 32 der Kathode 22 sind elektrisch mit dem positiven Terminal 12 der Batteriezelle 2 verbunden.

Die Anode 21 und die Kathode 22 sind durch den Separator 18 voneinander getrennt. Der Separator 18 ist ebenfalls folienartig ausgebildet. Der Separator 18 ist elektrisch isolierend ausgebildet, aber ionisch leitfähig, also für Lithiumionen durchlässig.

Das Zellengehäuse 3 der Batteriezelle 2 ist mit einem flüssigen Elektrolyt 15, oder mit einem Polymerelektrolyt, gefüllt. Der Elektrolyt 15 umgibt dabei die Anode 21, die Kathode 22 und den Separator 18. Auch der Elektrolyt 15 ist ionisch leitfähig.

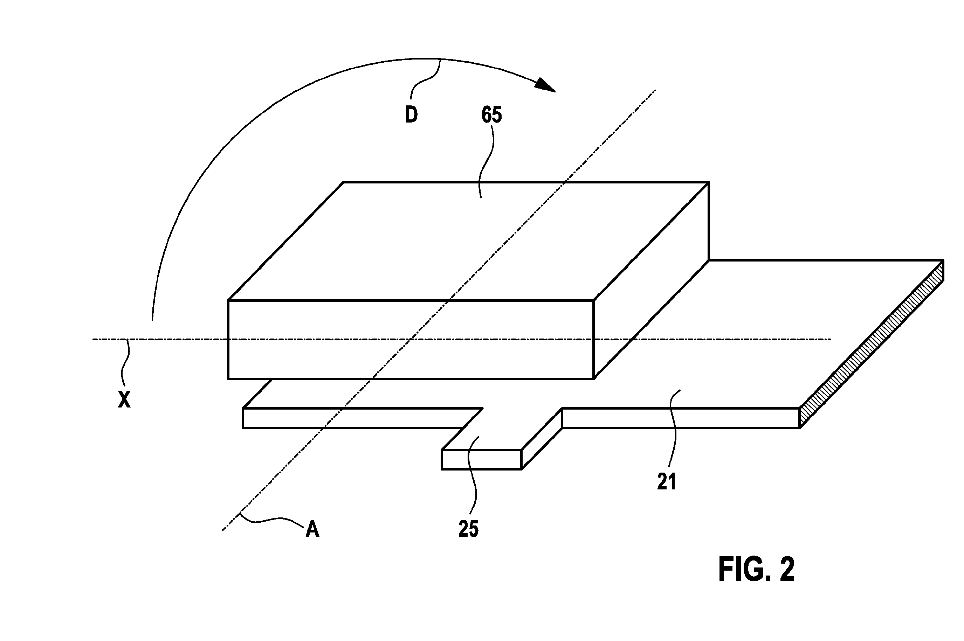

In Figur 2 zeigt einen Zustand bei Beginn der Herstellung des Elektrodenwickels 10 der Batteriezelle 2. Dabei ist ein Wickelkern 65 mit der aufzuwickelnden Anode 21 schematisch, perspektivisch dargestellt. Die Kathode 22 sowie der Separator 18, welcher zwei Folien umfasst, sind in dieser Darstellung nicht gezeigt. Während der Herstellung des Elektrodenwickels 10 wird der Wickelkern 65 durch einen nicht dargestellten Antrieb um eine Wickelachse A in eine Drehrichtung D gedreht. In der gezeigten Darstellung verläuft die Drehrichtung D im Uhrzeigersinn.

Der Wickelkern 65 ist vorliegend prismatisch, beziehungsweise quaderförmig, ausgebildet. Bezüglich der Wickelachse A, also bei Blick auf den Wickelkern 65 in Richtung der Wickelachse A, weist der Wickelkern 65 einen rechteckförmigen Querschnitt auf. Der rechteckförmige Querschnitt des Wickelkerns 65 umfasst zwei parallel zueinander verlaufende lange Seiten sowie zwei parallel zueinander verlaufende kurze Seiten.

Parallel zu den langen Seiten des rechteckförmigen Querschnitts des Wickelkerns 65 erstreckt sich eine Längsachse X des Wickelkerns 65. Die Längsachse X des Wickelkerns 65 schneidet dabei die Wickelachse A rechtwinklig. Der Wickelkern 65 ist somit ebenensymmetrisch zu einer Ebene ausgebildet, welche durch die Längsachse X und die Wickelachse A aufgespannt wird.

Auch andere Querschnitte des Wickelkerns 65 bezüglich der Wickelachse A sind denkbar. Der Querschnitt des Wickelkerns 65 soll dabei länglich in Richtung der Längsachse X ausgestaltet sein. Beispielsweise kann der Wickelkern 65 einen rautenförmigen, ovalen oder polygonalen Querschnitt haben. Insbesondere weist der Wickelkern 65 jedoch keine Rotationssymmetrie bezüglich der Wickelachse A auf.

Beide Folien des nicht dargestellten Separators 18 werden auf den Wickelkern 65 aufgelegt und an dem Wickelkern 65 befestigt. Durch eine Drehung des Wickelkerns 65 um die Wickelachse A werden zunächst einige Lagen der Folien auf den Wickelkern 65 aufgewickelt.

Dann wird ein Teil der Anode 21 flächig an die eine Folie des Separators 18 angelegt, die an einer Oberfläche des Wickelkerns 65 anliegt. Diese Folie ist somit zwischen der Anode 21 und der Oberfläche des Wickelkerns 65 angeordnet. Diese Oberfläche erstreckt sich parallel zu der durch die Längsachse X und die Wickelachse A aufgespannten Ebene. Eine Anodenkontaktfahne 25 des Stromableiters 31 der Anode 21 ragt von der Anode 21 weg und erstreckt sich parallel zu der Wickelachse A.

In einem folgenden Schritt wird auch ein Teil der hier nicht dargestellten Kathode 22 flächig an die andere Folie des Separators 18 angelegt, die an einer Oberfläche des Wickelkerns 65 anliegt. Diese Folie ist somit zwischen der Kathode 22 und der Oberfläche des Wickelkerns 65 angeordnet. Diese Oberfläche erstreckt sich parallel zu der durch die Längsachse X und die Wickelachse A aufgespannten Ebene. Eine hier nicht dargestellte Kathodenkontaktfahne 26 des Stromableiters 32 der Kathode 22 ragt von der Kathode 22 weg und erstreckt sich parallel zu der Wickelachse A.

Die Anodenkontaktfahne 25 der Anode 21 liegt dabei der hier nicht dargestellten Kathodenkontaktfahne 26 der Kathode 22 diametral in Bezug auf die Wickelachse A gegenüber.

Anschließend werden die Anode 21, die Kathode 22 sowie die beiden Folien des Separators 18 durch eine Drehung des Wickelkerns 65 um die Wickelachse A in die Drehrichtung D auf den Wickelkern 65 aufgewickelt.

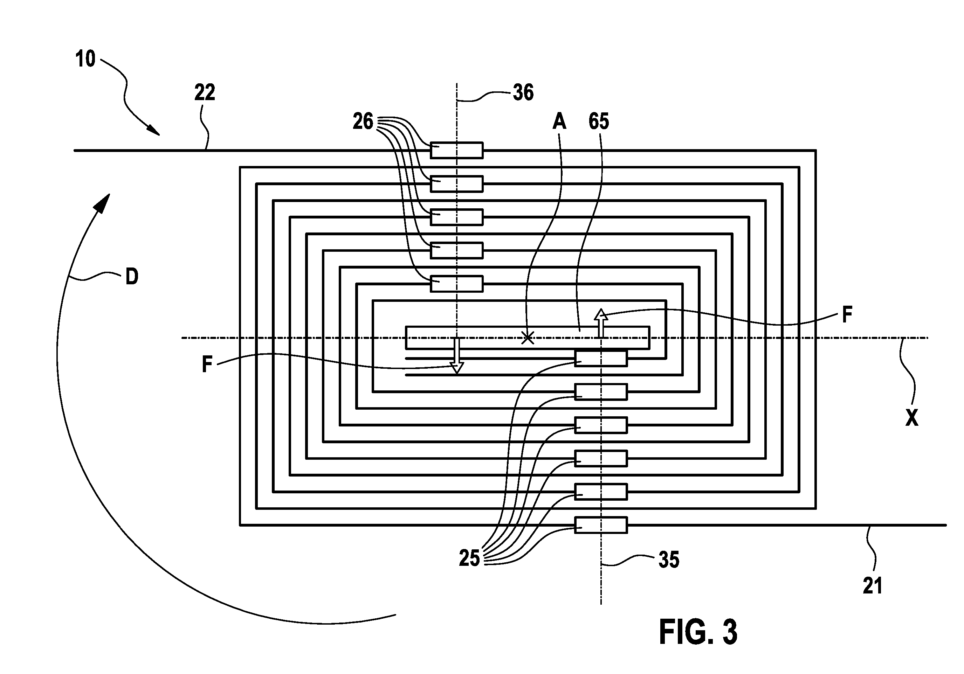

Figur 3 zeigt eine schematische Draufsicht auf den Elektrodenwickel 10 im Herstellprozess während des Aufwickelns der Anode 21 und der Kathode 22 auf den Wickelkern 65. Zwischen der Anode 21 und der Kathode 22 ist jeweils eine Folie des hier nicht dargestellten Separators 18 angeordnet.

Die innere Anodenkontaktfahne 25, die auch in Figur 3 gezeigt ist, ist dem Wickelkern 65 nahe gelegen. Mit jeder folgenden Lage der Anode 21 wird eine weitere Anodenkontaktfahne 25 auf die jeweils vorhergehende Anodenkontaktfahne 25 gelegt. Alle Anodenkontaktfahnen 25 der Anode 21 sind dabei miteinander fluchtend in einer Anodenlinie 35 angeordnet.

Die innere Kathodenkontaktfahne 26 ist ebenfalls dem Wickelkern 65 nahe gelegen. Mit jeder folgenden Lage der Kathode 22 wird eine weitere Kathodenkontaktfahne 26 auf die jeweils vorhergehende Kathodenkontaktfahne 26 gelegt. Alle Kathodenkontaktfahnen 26 der Kathode 22 sind dabei miteinander fluchtend in einer Kathodenlinie 36 angeordnet.

Die Anodenlinie 35 und die Kathodenlinie 36 verlaufen parallel zueinander. Die Anodenlinie 35 und die Kathodenlinie 36 schneiden jeweils die Längsachse X, vorliegend rechtwinklig. Die Anodenlinie 35 und die Kathodenlinie 36 verlaufen jeweils beabstandet von der Wickelachse A, vorliegend im gleichen Abstand zu der Wickelachse A, aber diametral der Wickelachse A gegenüber liegend.

Die Kathodenkontaktfahnen 26 sowie die Anodenkontaktfahnen 25 werden dabei derart relativ zu dem Wickelkern 65 ausgerichtet, dass während der Drehung um die Wickelachse A in die Drehrichtung D der Wickelkern 65 0 die Kathodenkontaktfahnen 26 sowie auf die Anodenkontaktfahnen 25 bewegt. Die bereits aufgewickelten Kathodenkontaktfahnen 26 sowie die bereits aufgewickelten Anodenkontaktfahnen 25 eilen bei der Drehung um die Wickelachse A in die Drehrichtung D also dem Wickelkern 65 vor.

Die Ausrichtung der Kathodenkontaktfahnen 26 sowie der Anodenkontaktfahnen 25 relativ zu dem Wickelkern 65 ist von der Drehrichtung D abhängig. In der vorliegenden Ausführungsform verläuft die Drehrichtung D im Uhrzeigersinn. Bei Blick von der Wickelachse A in Richtung der Längsachse X liegen die Anodenkontaktfahnen 25 somit rechts von der Längsachse X. Ebenso liegen bei Blick von der Wickelachse A in Richtung der Längsachse X die Kathodenkontaktfahnen 26 rechts von der Längsachse X.

Während der Drehung um die Wickelachse A in die Drehrichtung D wirkt auf die Anodenkontaktfahnen 25 sowie auf die Kathodenkontaktfahnen 26 jeweils eine Trägheitskraft F. Die Trägheitskräfte F wirken dabei zumindest annähernd tangential zu der Drehrichtung D und der Drehrichtung D entgegengesetzt. Die Trägheitskräfte F wirken also von den Anodenkontaktfahnen 25 und den Kathodenkontaktfahnen 26 in Richtung auf die Längsachse X. Die Trägheitskräfte F wirken zumindest annähernd in Richtung der Anodenlinie 35 sowie der Kathodenlinie 36.

In der vorliegenden Ausführungsform verläuft die Drehrichtung D im Uhrzeigersinn. Bei Blick von der Wickelachse A in Richtung der Längsachse X wirken die Trägheitskräfte F somit jeweils nach links, also in Richtung auf die Längsachse X. Durch die Trägheitskräfte F werden die bereits aufgewickelten Kathodenkontaktfahnen 26 sowie die bereits aufgewickelten Anodenkontaktfahnen 25 jeweils in Richtung auf die Längsachse X gebogen.

Auf die bereits aufgewickelten Kathodenkontaktfahnen 26 sowie auf die bereits aufgewickelten Anodenkontaktfahnen 25 wirkt aufgrund der Drehung auch eine Fliehkraft, die von der Wickelachse A in Radialrichtung nach außen gerichtet ist. Die Kathodenkontaktfahnen 26 sind jedoch in Radialrichtung nicht relativ zu der übrigen Kathode 22 biegbar. Ebenso sind die Anodenkontaktfahnen 25 in Radialrichtung nicht relativ zu der übrigen Anode 21 biegbar. Die wirkenden Fliehkräfte haben somit keinen wesentlichen Einfluss auf die Kathodenkontaktfahnen 26 und auf die Anodenkontaktfahnen 25.

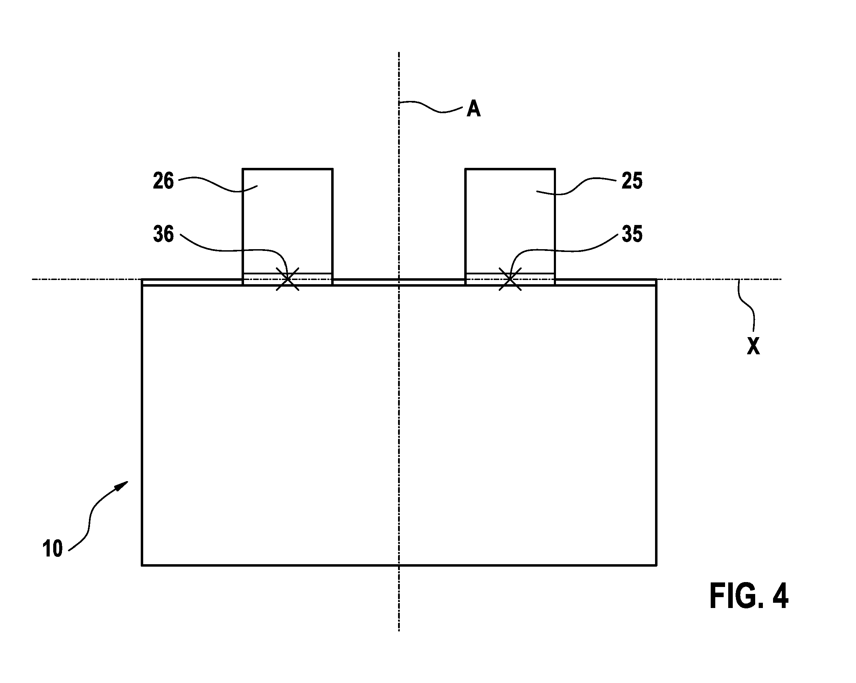

In Figur 4 ist eine schematische Seitenansicht des fertig gestellten Elektrodenwickels 10 gezeigt. In der vorliegenden Ausführungsform verbleibt der Wickelkern 65 in dem Elektrodenwickel 10, ist aber in der gezeigten Darstellung verdeckt. Der Wickelkern 65 kann auch nach Aufwickeln der Anode 21, der Kathode 22 und der beiden Folien des Separators 18 entnommen werden.

Die Anodenkontaktfahnen 25 der Anode 21 sind miteinander fluchtend in der Anodenlinie 35 angeordnet, und die Kathodenkontaktfahnen 26 der Kathode 22 sind miteinander fluchtend in der Kathodenlinie 36 angeordnet. In einem nachfolgenden Schritt werden die Anodenkontaktfahnen 25 sowie die Kathodenkontaktfahnen 26 jeweils mit einem Kollektor verbunden, und die Kollektoren werden elektrisch mit den Terminals 11, 12 der Batteriezelle 2 verbunden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung eines Elektrodenwickels (10) für eine Batteriezelle (2), wobei
eine folienartig ausgebildete Kathode (22) und eine folienartig ausgebildete Anode (21) an einen Wickelkern (65) angelegt werden, und die Kathode (22) und die Anode (21) durch Drehung des Wickelkerns (65) um eine Wickelachse (A) auf den Wickelkern (65) aufgewickelt werden, wobei
die Kathode (22) sich parallel zu der Wickelachse (A) erstreckende Kathodenkontaktfahnen (26) aufweist und/oder die Anode (21) sich parallel zu der Wickelachse (A) erstreckende Anodenkontaktfahnen (25) aufweist,
**dadurch gekennzeichnet, dass**
die Kathodenkontaktfahnen (26) und/oder die Anodenkontaktfahnen (25) derart relativ zu dem Wickelkern (65) ausgerichtet werden, dass die Kathodenkontaktfahnen (26) und/oder die Anodenkontaktfahnen (25) durch während der Drehung wirkende Trägheitskräfte (F) in Richtung auf eine die Wickelachse (A) rechtwinklig schneidende Längsachse (X) des Wickelkerns (65) gebogen werden.

2. Verfahren nach Anspruch 1, **dadurch gekennzeichnet, dass** der Wickelkern (65) bezüglich der Wickelachse (A) einen von einer rotationssymmetrischen Form abweichenden Querschnitt aufweist.

3. Verfahren nach Anspruch 2, **dadurch gekennzeichnet, dass** der Wickelkern (65) einen zumindest annähernd rechteckförmigen Querschnitt aufweist, wobei sich die Längsachse (X) parallel zu den langen Seiten des annähernd rechteckförmigen Querschnitts erstreckt.

4. Verfahren nach einem der vorstehenden Ansprüche, **dadurch gekennzeichnet, dass**
der Wickelkern (65) ebenensymmetrisch zu einer durch die Wickelachse (A) und die Längsachse (X) aufgespannten Ebene ausgebildet ist.

5. Verfahren nach einem der vorstehenden Ansprüche, **dadurch gekennzeichnet, dass**
die Kathodenkontaktfahnen (26) und/oder die Anodenkontaktfahnen (25) derart relativ zu dem Wickelkern (65) ausgerichtet werden, dass während der Drehung der Wickelkern (65) in Richtung auf die Kathodenkontaktfahnen (26) und/oder auf die Anodenkontaktfahnen (25) bewegt wird.

6. Verfahren nach einem der vorstehenden Ansprüche, **dadurch gekennzeichnet, dass**
die Kathodenkontaktfahnen (26) in einer Kathodenlinie (36) angeordnet werden, welche die Längsachse (X) schneidet, und/oder dass die Anodenkontaktfahnen (25) in einer Anodenlinie (35) angeordnet werden, welche die Längsachse (X) schneidet.

7. Verfahren nach Anspruch 6, **dadurch gekennzeichnet, dass** die Kathodenlinie (36) und/oder die Anodenlinie (35) die Längsachse (X) rechtwinklig schneidet.

8. Verfahren nach einem der vorstehenden Ansprüche, **dadurch gekennzeichnet, dass**
die Kathodenkontaktfahnen (26) in einer Kathodenlinie (36) angeordnet werden, welche beabstandet zu der Wickelachse (A) verläuft, und/oder dass
die Anodenkontaktfahnen (25) in einer Anodenlinie (35) angeordnet werden, welche beabstandet zu der Wickelachse (A) verläuft.

9. Elektrodenwickel (10), hergestellt durch ein Verfahren nach einem der vorstehenden Ansprüche.

10. Batteriezelle (2), umfassend mindestens einen Elektrodenwickel (10) nach Anspruch 9.

11. Verwendung einer Batteriezelle (2) nach Anspruch 10 in einem Elektrofahrzeug (EV), in einem Hybridfahrzeug (HEV), in einem Plug-In-Hybridfahrzeug (PHEV), in einer stationären Batterie, in einer Batterie in einer marinen Anwendung oder in einer Batterie in einer aeronautischen Anwendung.
